# EUROPEAN PATENT APPLICATION

(11) **EP 3 506 091 A1**
(43) Date of publication of application: **03.07.2019**
(21) Application number: 18214530.0
(22) Date of filing: 20.12.2018
(51) Int. Cl.: G06F 9/445, G06F 17/27, G06F 3/023

(54) **METHOD FOR CONFIGURING INPUT METHOD AND TERMINAL DEVICE**

(30) Priority: 28.12.2017 CN 201711461499
(71) Applicant: GUANGDONG OPPO MOBILE TELECOMMUNICATIONS CORP., LTD., Dongguan, Guangdong 523860 (CN)
(72) Inventor: CHENG, Jie, Dongguan, Guangdong 523860 (CN); CHEN, Yan, Dongguan, Guangdong 523860 (CN)
(74) Representative: Manitz Finsterwald Patent- und Rechtsanwaltspartnerschaft mbB

(57) **Abstract**

A method for configuring an input method and a terminal device are provided. The method includes: receiving, by an operating system, scene information from a target application, the scene information being configured to indicate an internal running scene of the target application; querying, by the operating system, an input-method word bank that matches the internal running scene according to the scene information; enabling the input-method word bank when the operating system detects an input request in the internal running scene.

## Description

### TECHNICAL FIELD

The present disclosure relates to the technical field of terminal device, and more particularly to a method for configuring an input method, and a terminal device.

### BACKGROUND

With the rapid development of related technologies for terminal devices such as smart phones and the like, more and more applications are installed in user mobile phones, such as reading applications, payment applications, game applications, music applications, and so on. People's life has been inseparable from mobile phones. In the process of using the applications, the input method function is enabled, and the system default input method is enabled for keyword search and text entry.

### SUMMARY

Embodiments of the present disclosure provide a method for configuring an input method and a terminal device.

According to a first aspect, the embodiments of the present disclosure provide a method for configuring an input method, which is applied to a terminal device. The terminal device is provided with an operating system and one or more applications. The above method includes the follows: receiving, by the operating system, scene information from a target application, the scene information being configured to indicate an internal running scene of the target application; querying, by the operating system, an input-method word bank that matches the internal running scene according to the scene information; enabling, by the operating system, the input-method word bank when an input request in the internal running scene is detected.

According to a second aspect, the embodiments of the present disclosure provide a terminal device. The terminal device includes at least one processor and a computer readable storage coupled to the at least one processor. The computer readable storage stores at least one computer executable instruction thereon, which when executed by the at least one processor, cause the at least one processor to carry out actions, including: receiving scene information from a target application, the scene information being configured to indicate an internal running scene of the target application; querying an input-method word bank that matches the internal running scene according to the scene information; and enabling the input-method word bank when an input request in the internal running scene is detected.

According to a third aspect, the embodiments of the present disclosure provide a non-transitory computer readable storage medium. The non-transitory computer readable storage medium is configured to store computer programs for electronic data interchange which, when executed by a processor, cause the processor to carry out following actions: receiving scene information from a target application, the scene information being configured to indicate an internal running scene of the target application; querying an input-method word bank that matches the internal running scene according to the scene information; enabling the input-method word bank when an input request in the internal running scene is detected.

It can be seen that, in the embodiments of the present disclosure, the operating system of the terminal device first receives the scene information from the target application, the scene information being configured to indicate the internal running scene of the target application, and then queries the input-method word bank matching the internal running scene according to the scene information, and finally enables the input-method word bank when an input request in the internal running scene is detected. It can be seen that the operating system can dynamically load the matching input-method word bank according to the internal running scene of the target application, thereby preventing the operating system loading the default input-method word bank all the times and can not accurately match the target application, which is beneficial for improving the flexibility and accuracy for configuring input method resources by the terminal device.

### BRIEF DESCRIPTION OF THE DRAWINGS

To describe technical solutions in the embodiments of the present disclosure or of the related art more clearly, the following briefly introduces the accompanying drawings required for describing the embodiments of the present disclosure. Apparently, the accompanying drawings in the following description illustrate some embodiments of the present disclosure. Those of ordinary skill in the art may also obtain other drawings based on these accompanying drawings without creative efforts.
FIG. 1 is a schematic structural diagram of a smart phone according to an embodiment of the present disclosure.
FIG. 2 is a schematic diagram of a program running space of a smart phone.
FIG. 3 is a system architecture diagram of an operating system.
FIG. 4 is a schematic flowchart of a method for configuring an input method according to an embodiment of the present disclosure.
FIG. 5 is a schematic flowchart of another method for configuring an input method according to an embodiment of the present disclosure.
FIG. 6 is a schematic flowchart of another method for configuring an input method according to an embodiment of the present disclosure.
FIG. 7 is a schematic structural diagram of a terminal device according to an embodiment of the present disclosure.
FIG. 8 is a block diagram of functional units of a terminal device according to an embodiment of the present disclosure.

### DETAILED DESCRIPTION

In order to enable those skilled in the art to better understand solutions of the present disclosure, technical solutions in embodiments of the present disclosure will be described clearly and completely hereinafter with reference to the accompanying drawings in the embodiments of the present disclosure. Apparently, the described embodiments are merely some rather than all embodiments of the present disclosure. All other embodiments obtained by those of ordinary skill in the art based on the embodiments of the present disclosure without creative efforts shall fall within the protection scope of the present disclosure.

The terms "first", "second", and the like used in the specification, the claims, and the accompany drawings of the present disclosure are used to distinguish different objects rather than describe a particular order. The terms "include", "comprise", and "have" as well as variations thereof are intended to cover non-exclusive inclusion. For example, a process, method, system, product, or apparatus including a series of steps or units is not limited to the listed steps or units. On the contrary, it can optionally include other steps or units that are not listed; alternatively, other steps or units inherent to the process, method, product, or device can be included either.

The term "embodiment" or "implementation" referred to herein means that a particular feature, structure, or characteristic described in conjunction with the embodiment may be contained in at least one embodiment of the present disclosure. The phrase appearing in various places in the specification does not necessarily refer to the same embodiment, nor does it refer to an independent or alternative embodiment that is mutually exclusive with other embodiments. It is expressly and implicitly understood by those skilled in the art that an embodiment described herein may be combined with other embodiments.

According to embodiments of the present disclosure, a method for configuring an input method is provided. The method is applied to a terminal device which is provided with an operating system and one or more applications. The method includes: receiving, by the operating system, scene information from a target application, the scene information being configured to indicate an internal running scene of the target application; querying, by the operating system, an input-method word bank that matches the internal running scene according to the scene information; enabling, by the operating system, the input-method word bank when an input request in the internal running scene is detected.

According to embodiments of the present disclosure, an apparatus for configuring an input method is provided. The apparatus is applied to a terminal device which is provided with an operating system and one or more applications. The apparatus includes a receiving unit, a querying unit and an enabling unit. The receiving unit is configured to receive scene information from a target application. The scene information is configured to indicate an internal running scene of the target application. The querying unit is configured to query an input-method word bank that matches the internal running scene according to the scene information. The enabling unit is configured to enable the input-method word bank when an input request in the internal running scene is detected.

According to embodiments of the present disclosure, a terminal device is provided. The terminal device includes at least one processor and a computer readable storage coupled to the at least one processor. The computer readable storage stores at least one computer executable instruction thereon, which when executed by the at least one processor, cause the at least one processor to carry out actions, including: receiving scene information from a target application, the scene information being configured to indicate an internal running scene of the target application; querying an input-method word bank that matches the internal running scene according to the scene information; enabling the input-method word bank when an input request in the internal running scene is detected.

According to embodiments of the present disclosure, a non-transitory computer readable storage medium is provided. The non-transitory computer readable storage medium is configured to store computer programs which, when executed by a processor, cause the processor to carry out following actions: receiving scene information from a target application, the scene information being configured to indicate an internal running scene of the target application; querying an input-method word bank that matches the internal running scene according to the scene information; enabling the input-method word bank when an input request in the internal running scene is detected.

Embodiments of the present disclosure will be detailed below.

The terminal devices involved in the embodiments of the present disclosure may include various handheld devices, in-vehicle devices, wearable devices, computing devices that have wireless communication functions or other processing devices coupled to the wireless modem, as well as various forms of user equipments (UE), mobile stations (MS), terminal devices, and so on. For the convenience of description, the above-mentioned devices are collectively referred to as a terminal device. The operating system involved in the embodiments of the present disclosure is a software system that uniformly manages hardware resources and provides a service interface to users. The following takes a smart phone as an example to introduce an example structure of the terminal device.

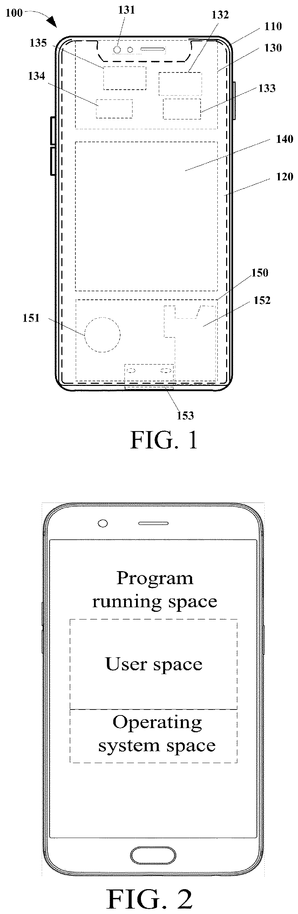

FIG. 1 is a schematic structural diagram of a smart phone 100 according to an embodiment of the present disclosure. The smart phone 100 includes a housing 110, a touch display screen 120, a main board 130, a battery 140, and a sub-board 150. The main board 130 is provided with a front camera 131, a system on chip (SoC) 132 (including an application processor and a baseband processor), a memory 133, a power management chip 134, a radio frequency system 135, and so on. The sub board 150 is provided with a vibrator 151, an integrated sound chamber 152 and a VOOC flash charging interface 153. The touch display screen 120 can be a full screen or a special screen, which is not limited herein.

The SoC 132 is the control center of the smart phone, it connects various parts of the whole smart phone through various interfaces and lines, runs or executes software programs and/or modules stored in the memory 133, and invokes data stored in the memory 133 to perform various functions of the smart phone and process data, thereby monitoring the smart phone as a whole. The processor SoC 132 may include one or more processing units. For example, the SoC 132 may integrate an application processor (AP), a baseband processor (also known as a baseband chip or a baseband), and so on. The application processor mainly handles the operating system, the user interface, the applications, and so on, and the baseband processor mainly processes wireless communication. It will be understood that the above-mentioned baseband processor may also not be integrated into the SoC 132. The SoC 132 can be, for example, a central processing unit (CPU), a general purpose processor, a digital signal processor (DSP), an application-specific integrated circuit (ASIC), and a field programmable gate array (FPGA), or other programmable logic device, transistor logic device, hardware component, or any combination thereof. It is possible to implement or carry out the various illustrative logical blocks, modules and circuits described in connection with the present disclosure. The above processor may also be a combination of computing functions, such as a combination of one or more microprocessors, a combination of a DSP and a microprocessor, and so on.

The memory 133 may be configured to store software programs and modules, and the SoC 132 executes various functional applications and data processing of the smart phone by running software programs and modules stored in the memory 133. The memory 133 may mainly include a program storage area and a data storage area. The program storage area may store an operating system, application programs required for at least one function, and so on. The data storage area may store data created according to use of the smart phone, and so on. In addition, the memory 133 may include a high-speed random access memory, and may further include a non-volatile memory such as at least one magnetic disk storage device, flash memory device, or other volatile solid storage devices. The memory 133 may be, for example, a random access memory (RAM), a flash memory, a read only memory (ROM), an erasable programmable read only memory (EPROM), and an electrically erasable programmable read only memory (EEPROM), a register, a hard disk, a removable hard disk, a compact disk read only (CD-ROM) or any other form of storage medium known in the art.

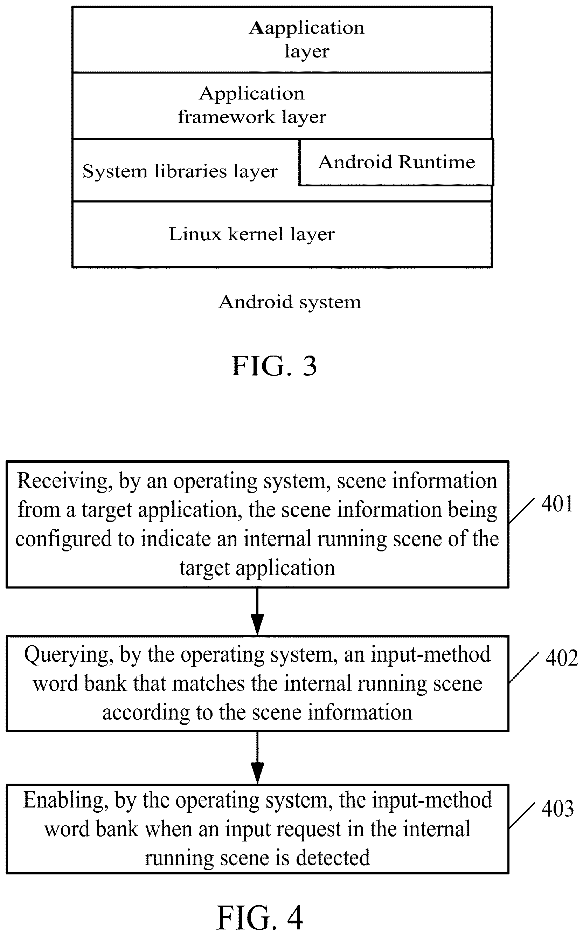

FIG. 2 is a schematic diagram of a program running space of a smart phone according to an embodiment of the present disclosure. Currently, a terminal device such as a smart phone is generally provided with a program running space. The program running space includes a user space and an operating system space. One or more applications run in the user space. The one or more applications are third-party applications installed on the terminal device, and an operating system of the terminal device runs in the operating system space. An Android system, a mobile operating system iOS developed by Apple, and so on, which is not limited herein, may run on the terminal device. As illustrated in FIG. 3, taking the Android system running on the terminal device as an example, the corresponding user space includes an application layer of the Android system, and the operating system space may include an application framework layer, a system libraries layer (including system libraries and Android Runtime), Linux kernel layer of the Android system. The application layer includes various types of applications that directly interact with user, or service programs written in the Java language and running in the background. For example, programs that implement common basic functions on the smart phones, such as short messaging service (SMS), text messages, phone dialing, picture browsers, calendars, games, maps, world wide web browsers, and so on, and other applications developed by developers. The application framework layer provides a series of class libraries required for developing Android application programs, which can be used to reuse components, or to implement personalized extension through inheritance. The system libraries layer is the support of the application framework, providing services for the various components in the Android system. The system libraries layer consists of the system class library and the Android runtime. The Android runtime consists of a core library and a Dalvik virtual machine. The Linux kernel layer is configured to implement core functions such as hardware device driver, process and memory management, network protocol stack, power management, wireless communication, and so on.

Processes created by the above third-party applications run in the user space. When it needs to perform operations such as sending data through network, reading disk resources, and so on, it must be completed by calling standard interface functions, such as write and send, and so on, which are provided by the operating system. That is, the user's request operation is completed by the CPU calling the code of the operating system space. It can be seen that only by calling the standard interface functions provided by the operating system can the third-party applications call the functions provided by the operating system. At the same time, the operating system does not know which functions are actually executed by the third-party application, and the target application cannot command the operating system to perform special operations. The operating system and the third-part application are independent from each other, which makes the operating system unable to distinguish the internal running scene of the target application. The operating system can only use a set of standard parameters to adapt, but the operating system is unable to perform targeted performance optimization for the internal running scene of the target application.

In the above case, the embodiments of the present disclosure provide a method for configuring an input method for a target application of the terminal device. In the method, the operating system of the terminal device first receives the scene information from the target application, the scene information being configured to indicate the internal running scene of the target application, and then queries the input-method word bank matching the internal running scene according to the scene information, and finally enables the input-method word bank when an input request in the internal running scene is detected. It can be seen that the operating system can dynamically load the matching input-method word bank according to the internal running scene of the target application, thereby preventing the operating system loading the default input-method word bank all the times and not accurately match the target application, which is beneficial for improving the flexibility and accuracy for configuring input method resources by the terminal device.

The embodiments of the present disclosure will be described below with reference to the accompanying drawings.

FIG. 4 is a schematic flowchart of a method for configuring an input method according to an embodiment of the present disclosure. The method is applied to a terminal device which is provided with an operating system and one or more applications. As illustrated in FIG. 2, the method for configuring the input method begins at block 401.

At block 401, the operating system receives scene information from a target application. The scene information is configured to indicate an internal running scene of the target application.

The target application refers to a third-party application installed in a user space of the terminal device. The third-party application may be, for example, a camera application, an instant messaging application, a game application, and so on. The third-party application may be installed by a user or pre-installed by the developer before the terminal device leaves the factory, which is not limited herein.

The internal running scene of the target application may be divided according to a running interface, or divided according to functions, or divided by a developer or a user, which is not limited herein. For example, taking a game application as the target application, the internal running scene of the game application may include a mall scene, a team battle scene, a team scene, and so on.

In a specific implementation, a preset data channel is provided between the target application and the operating system. The preset data channel is an effective data transmission link established between the target application and the operating system when the target application is running. The data transmission link will be cleared after the target application is not running. When the target application communicates with the operating system, an agreed data transmission format and data transmission manner can be adopted. The data transmission formats such as the currently mainstream JavaScript Object Notation (JSON), the protocol buffer (Protobuf), and so on, or a custom output communication format, can be chosen as a data communication format. Game applications and operating systems can choose the more common data transmission manners, such as Socket communication, shared memory or file, FIFO, and so on. The game application and the operating system must agree on a specified data transmission manner, so that the game application and the operation system can establish a viable data transmission channel.

At block 402, the operation system queries an input-method word bank that matches the internal running scene according to the scene information.

The text may include words, letters, symbols, phrases, expressions, and so on. The language type of the text may be Chinese, English, multi-language, and so on, which is not limited herein.

At block 403, the operating system enables the input-method word bank when an input request in the internal running scene is detected.

The operating system may generate the input request upon detecting a click operation on an input function button displayed on the running interface of the current internal running scene.

In a specific implementation, the operating system may be provided with an accurate classification module, and the accurate classification module is configured to analyze the scene information transmitted from the target application. Taking the game application as an example, for the game types, the operating system can classify, according to different types, the games into various categories such as casual puzzle, action adventure, flight shooting, chess, sports racing, management, strategy, role playing, and so on. Each type of the game applications may correspond to an exclusive precise classification module. For game internal scenes, the operating system can divide the behaviors of different game feeling into multiple game internal scenes such as startup, loading, chatting, preparing, in-game, opening, team battle, victory, settlement, and so on. The corresponding exclusive precise classification module may determine the corresponding internal running scene by analyzing the scene information transmitted from the target application.

In addition, the operating system may further be provided with a word bank management module, which is configured to maintain an input-method word bank corresponding to the target application, and collect, according to different internal running scenes, the commonly used words used in these scenes, to match different input-method word banks.

In addition, the operating system may further be provided with an input-method word bank switching module. When the operating system identifies the internal running scene of the target application, a corresponding input-method word bank is instantly switched by the input method word bank switching module.

It can be seen that, in the embodiments of the present disclosure, the operating system of the terminal device first receives the scene information from the target application, the scene information being configured to indicate the internal running scene of the target application, and then queries the input-method word bank matching the internal running scene according to the scene information, and finally enables the input-method word bank when an input request in the internal running scene is detected. It can be seen that the operating system can dynamically load the matching input-method word bank according to the internal running scene of the target application, thereby preventing the operating system loading the default input-method word bank all the times and can not accurately match the target application, which is beneficial for improving the flexibility and accuracy for configuring input method resources by the terminal device.

In an embodiment, the scene information includes a scene identifier of the internal running scene of the target application. The operating system querying an input-method word bank that matches the internal running scene according to the scene information, includes that: the operating system querying a predetermined list which defines mapping relationships between scene identifiers and input-method word banks, by taking the received scene identifier as a query identifier, and determining the input-method word bank corresponding to the received scene identifier as the input-method word bank that matches the internal running scene.

In a specific implementation, the target application may identify the running scene corresponding to the current running interface according to key performance parameters of the current running interface, and notify the operating system of the scene identifier of the running scene. The operating system finally determines the corresponding input-method word bank, based on the mapping relationships between the predetermined scene identifiers and input-method word banks. The key performance parameters include associated information of the current running interface, such as interface feature data, functions, and so on.

It can be seen that, in the embodiment, the operating system can quickly and accurately identify, based on the preset mapping relationship, the input-method word bank corresponding to the current running scene of the target application, thereby improving the real-time capability and accuracy for loading the input-method word bank.

In an embodiment, the scene information includes interface information of the running interface of the internal running scene of the target application. The operating system querying an input-method word bank that matches the internal running scene according to the scene information, includes: the operating system determining, according to the interface information, the internal running scene of the target application; and the operating system querying a predetermined list which defines mapping relationships between internal running scenes and input-method word banks, by taking the determined internal running scene as a query identifier, and determining the input-method word bank corresponding to the determined internal running scene as the input-method word bank that matches the internal running scene.

The interface information includes the partition information, function information, content information, and so on, which is included in the running interface, and is not limited herein.

It can be seen that, in the embodiment, the interface information may include different information in multiple dimensions, such as interface content, interface partitioning, interface function, and so on, and the operating system may determine the corresponding internal running scene according to the interface information, so that the target application in the user space only needs to directly notify the operating system of the interface information in the current running interface, and the determination process is assigned to the operating system with stronger computing capability to perform, which can effectively reduce the computational complexity of the user space and facilitate the smoother operation of the target application.

In an embodiment, the method may further include the following: querying, by the operating system, a keyword set that matches the internal running scene; and displaying, by the operating system, a shortcut of the keyword set on a running interface of the internal running scene.

The keyword set may include frequently-used words which are input in the internal running scene by a primary user and collected by the terminal device.

It can be seen that, in the embodiment, the operating system can display the shortcut of the keyword set on the running interface of the internal running scene, and the keyword set includes the frequently-used words used in the current internal running scene, thereby providing a more convenient text input method, and improving the convenience and accuracy of text input.

In an embodiment, the input-method word bank includes frequently-used words used in the internal running scene, and the frequently-used words have a higher display priority than other words, and the other words are the words included in the input-method word bank except the frequently-used words. The method may further include the follows after enabling the input-method word bank: querying, by the operating system, the enabled input-method word bank according to input information; acquiring and displaying, by the operating system, at least one reference word which is included in the frequently-used words and matches the input information; and determining, by the operating system, a target word as an input result according to a selection operation on the target word which is included in the at least one reference word.

For example, suppose the target application is a game application, the internal running scene is a team battle scene, and the matching input-method word bank includes a frequently-used text of "shang ta" used in the team battle scene. When the information of "st" is input to perform a text query, the operating system queries the input-method word bank, and may first display the high-priority text of "shang ta" for selecting, thereby improving the speed of the target word search.

It can be seen that, in the embodiment, the input-method word bank matching the current internal running scene includes the frequently-used text of the scene, when a key text search is performed, the operating system will first display, based on the input-method word bank, the frequently-used text for selecting, thereby improving the efficiency and convenience of text input.

In an embodiment, the target application is a game application, the internal running scene of the game application includes any one of the following: a preparation scene, a team battle scene, a victory scene, and a settlement scene.

In an embodiment, the method may further include the following: the operating system acquiring an input record in the internal running scene; the operating system generating input-method words based on the input record; and the operating system updating, with the generated input-method words, the input-method word bank that matches the internal running scene.

It can be seen that, in the embodiment, the operating system can intelligently generate input-method words based on the user's input record and update the input-method word bank with the generated input-method words, which is more in line with the user's input habits and improves the accuracy of text input in the internal running scene.

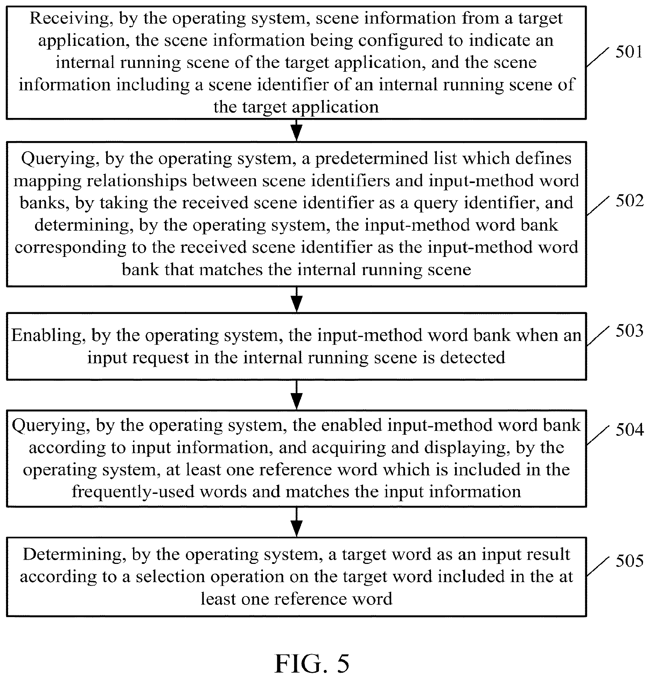

Consistent with the above embodiment illustrated in FIG. 4, FIG. 5 is a schematic flowchart of another method for configuring an input method according to an embodiment of the present disclosure. The method is applied to a terminal device which is provided with an operating system and one or more applications. As illustrated in FIG. 5, the method for configuring the input method begins at block 501.

At block 501, the operating system receives scene information from a target application. The scene information is configured to indicate an internal running scene of the target application, and the scene information includes a scene identifier of an internal running scene of the target application.

At block 502, the operating system queries a predetermined list which defines mapping relationships between scene identifiers and input-method word banks, by taking the received scene identifier as a query identifier, and determines the input-method word bank corresponding to the received scene identifier as the input-method word bank that matches the internal running scene.

The input-method word bank includes frequently-used words used in the internal running scene, and the frequently-used words have a higher display priority than other words, and the other words are the words included in the input-method word bank except the frequently-used words.

At block 503, the operating system enables the input-method word bank when an input request in the internal running scene is detected.

At block 504, the operating system queries the enabled input-method word bank according to input information, and acquires and displays at least one reference word which is included in the frequently-used words and matches the input information.

At block 505, the operating system determines a target word as an input result according to a selection operation on the target word which is included in the at least one reference word.

It can be seen that, in the embodiments of the present disclosure, the operating system of the terminal device first receives the scene information from the target application, the scene information being configured to indicate the internal running scene of the target application, and then queries the input-method word bank matching the internal running scene according to the scene information, and finally enables the input-method word bank when an input request in the internal running scene is detected. It can be seen that the operating system can dynamically load the matching input-method word bank according to the internal running scene of the target application, thereby preventing the operating system loading the default input-method word bank all the times and can not accurately match the target application, which is beneficial for improving the flexibility and accuracy for configuring input method resources by the terminal device.

In addition, the operating system can quickly and accurately identify, based on the preset mapping relationship, the input-method word bank corresponding to the current running scene of the target application, thereby improving the real-time capability and accuracy for loading the input-method word bank.

In addition, the input-method word bank matching the current internal running scene includes the frequently-used text of the scene, when a key text search is performed, the operating system will first display, based on the input-method word bank, the frequently-used text for selecting, thereby improving the efficiency and convenience of text input.

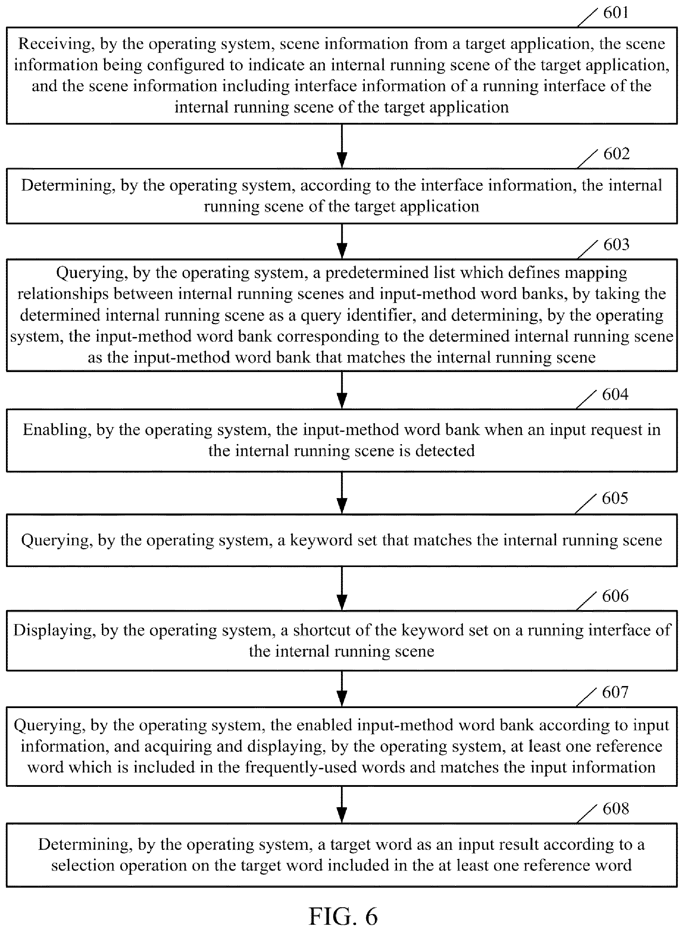

Consistent with the above embodiment illustrated in FIG. 4, FIG. 6 is a schematic flowchart of another method for configuring an input method according to an embodiment of the present disclosure. The method is applied to a terminal device which is provided with an operating system and one or more applications. As illustrated in FIG. 6, the method for configuring the input method begins at block 601.

At block 601, the operating system receives scene information from a target application. The scene information is configured to indicate an internal running scene of the target application, and the scene information includes interface information of a running interface of the internal running scene of the target application. The target application is a game application, the internal running scene of the game application includes any one of the following: a preparation scene, a team battle scene, a victory scene, and a settlement scene.

At block 602, the operating system determines, according to the interface information, the internal running scene of the target application.

At block 603, the operating system queries a predetermined list which defines mapping relationships between internal running scenes and input-method word banks, by taking the determined internal running scene as a query identifier, and determines the input-method word bank corresponding to the determined internal running scene as the input-method word bank that matches the internal running scene.

The input-method word bank includes frequently-used words used in the internal running scene, and the frequently-used words have a higher display priority than other words, and the other words are the words included in the input-method word bank except the frequently-used words.

At block 604, the operating system enables the input-method word bank when an input request in the internal running scene is detected.

At block 605, the operating system queries a keyword set that matches the internal running scene.

At block 606, the operating system displays a shortcut of the keyword set on a running interface of the internal running scene.

At block 607, the operating system queries the enabled input-method word bank according to input information, and acquires and displays at least one reference word which is included in the frequently-used words and matches the input information.

At block 608, the operating system determines a target word as an input result according to a selection operation on the target word which is included in the at least one reference word.

It can be seen that, in the embodiments of the present disclosure, the operating system of the terminal device first receives the scene information from the target application, the scene information being configured to indicate the internal running scene of the target application, and then queries the input-method word bank matching the internal running scene according to the scene information, and finally enables the input-method word bank when an input request in the internal running scene is detected. It can be seen that the operating system can dynamically load the matching input-method word bank according to the internal running scene of the target application, thereby preventing the operating system loading the default input-method word bank all the times and can not accurately match the target application, which is beneficial for improving the flexibility and accuracy for configuring input method resources by the terminal device.

In addition, the interface information may include different information in multiple dimensions, such as interface content, interface partitioning, interface function, and so on, and the operating system may determine the corresponding internal running scene according to the interface information, so that the target application in the user space only needs to directly notify the operating system of the interface information in the current running interface, and the determination process is assigned to the operating system with stronger computing capability to perform, which can effectively reduce the computational complexity of the user space and facilitate the smoother operation of the target application.

In addition, the operating system can display the shortcut of the keyword set on the running interface of the internal running scene, and the keyword set includes the frequently-used words used in the current internal running scene, thereby providing a more convenient text input method, and improving the convenience and accuracy of text input.

In addition, the input-method word bank matching the current internal running scene includes the frequently-used text of the scene, when a key text search is performed, the operating system will first display, based on the input-method word bank, the frequently-used text for selecting, thereby improving the efficiency and convenience of text input.

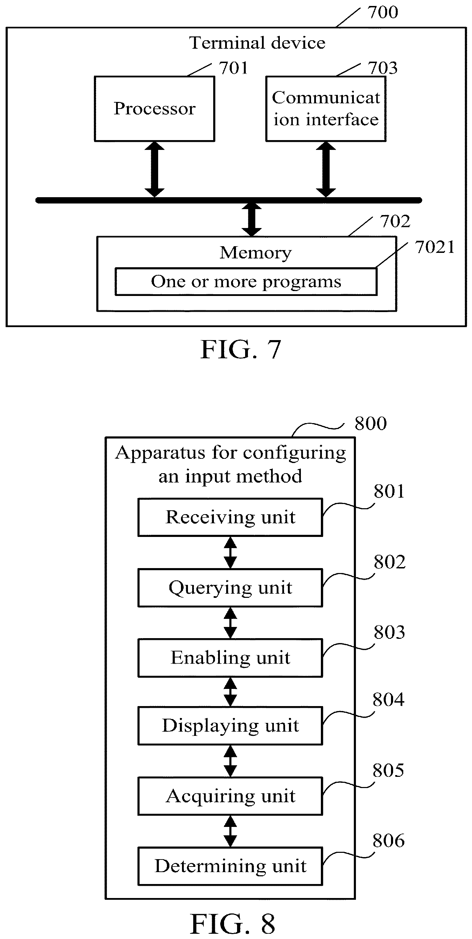

Consistent with the above embodiment illustrated in FIGS. 4 to 6, FIG. 7 is a schematic structural diagram of a terminal device 700 according to an embodiment of the present disclosure. One or more applications and an operating system run on the terminal device 700. As illustrated in FIG. 7, the terminal device 700 includes a processor 701, a memory 702, a communication interface 703, and one or more programs 7021. The one or more programs 7021 are different from the one or more applications, and the one or more programs 7021 are stored in the memory 702, and are configured to be executed by the processor 701. The programs 7021 include instructions for performing the following operations: receiving scene information from a target application, the scene information being configured to indicate an internal running scene of the target application; querying an input-method word bank that matches the internal running scene according to the scene information; and enabling the input-method word bank when an input request in the internal running scene is detected.

It can be seen that, in the embodiments of the present disclosure, the operating system of the terminal device first receives the scene information from the target application, the scene information being configured to indicate the internal running scene of the target application, and then queries the input-method word bank matching the internal running scene according to the scene information, and finally enables the input-method word bank when an input request in the internal running scene is detected. It can be seen that the operating system can dynamically load the matching input-method word bank according to the internal running scene of the target application, thereby preventing the operating system loading the default input-method word bank all the times and can not accurately match the target application, which is beneficial for improving the flexibility and accuracy for configuring input method resources by the terminal device.

In an embodiment, the scene information includes a scene identifier of the internal running scene of the target application. In the operation of querying an input-method word bank that matches the internal running scene according to the scene information, the instructions included in the programs 7021 are specifically configured to perform the following operations: querying a predetermined list which defines mapping relationships between scene identifiers and input-method word banks, by taking the received scene identifier as a query identifier, and determining the input-method word bank corresponding to the received scene identifier as the input-method word bank that matches the internal running scene.

In an embodiment, the scene information includes interface information of a running interface of the internal running scene of the target application. In the operation of querying an input-method word bank that matches the internal running scene according to the scene information, the instructions included in the programs are specifically configured to perform the following operations: determining, according to the interface information, the internal running scene of the target application; and querying a predetermined list which defines mapping relationships between internal running scenes and input-method word banks, by taking the determined internal running scene as a query identifier, and determining the input-method word bank corresponding to the determined internal running scene as the input-method word bank that matches the internal running scene.

In an embodiment, the programs 7021 further include instructions for performing the following operations: querying a keyword set that matches the internal running scene; and displaying a shortcut of the keyword set on a running interface of the internal running scene.

In an embodiment, the input-method word bank includes frequently-used words used in the internal running scene, and the frequently-used words have a higher display priority than other words, and the other words are the words included in the input-method word bank except the frequently-used words. The programs further include instructions for performing the following operations after enabling the input-method word bank: querying the enabled input-method word bank according to input information; acquiring and displaying at least one reference word which is included in the frequently-used words and matches the input information; and determining a target word as an input result according to a selection operation on the target word which is included in the at least one reference word.

In an embodiment, the target application is a game application, the internal running scene of the game application includes any one of the following: a preparation scene, a team battle scene, a victory scene, and a settlement scene.

In an embodiment, the computer programs are further executed by the processor to carry out the following actions: acquiring an input record in the internal running scene; generating input-method words based on the input record; and updating, with the generated input- method words, the input-method word bank that matches the internal running scene.

The foregoing describes the solutions of the embodiments of the present disclosure mainly from the perspective of execution process on the method side. It should be understood that, in order to implement the above functions, the terminal device includes corresponding hardware structures and/or software modules for performing various functions. Those skilled in the art will readily appreciate that the present disclosure can be implemented in hardware or a combination of hardware and computer software, in combination with the units and algorithm steps of the various examples described in the embodiments disclosed herein. Whether a function is implemented in hardware or computer software to drive hardware depends on the specific application and design constraints of the solutions. Those skilled in the art can use different methods for implementing the described functions for each particular application, but such implementation should not be considered to be beyond the scope of the present application.

According to the embodiment of the present application, functional unit division of the terminal device can be performed according to the foregoing method embodiments. For example, each functional unit may be divided according to each function, or two or more functions may be integrated into one processing unit. The above integrated unit can be implemented in the form of hardware or in the form of a software functional unit. It should be noted that the division of the units in the embodiments of the present disclosure is schematic, and is only a logical function division, and there can be other manners of division during actual implementations.

In the case of employing integrated units, FIG. 8 illustrates a block diagram of one possible functional unit configuration of an apparatus 800 for configuring input method referred in the above embodiments. The apparatus 800 for configuring input method is applied to a terminal device, and includes a receiving unit 801, a querying unit 802, and an enabling unit 803.

The receiving unit 801 is configured to receive scene information from a target application. The scene information is configured to indicate an internal running scene of the target application.

The querying unit 802 is configured to query an input-method word bank that matches the internal running scene according to the scene information.

The enabling unit 803 is configured to enable the input-method word bank when an input request in the internal running scene is detected.

It can be seen that, in the embodiments of the present disclosure, the operating system of the terminal device first receives the scene information from the target application, the scene information being configured to indicate the internal running scene of the target application, and then queries the input-method word bank matching the internal running scene according to the scene information, and finally enables the input-method word bank when an input request in the internal running scene is detected. It can be seen that the operating system can dynamically load the matching input-method word bank according to the internal running scene of the target application, thereby preventing the operating system loading the default input-method word bank all the times and can not accurately match the target application, which is beneficial for improving the flexibility and accuracy for configuring input method resources by the terminal device.

In an embodiment, the scene information includes a scene identifier of the internal running scene of the target application. In the operation of querying an input-method word bank that matches the internal running scene according to the scene information, the querying unit 802 is specifically configured to: query a predetermined list which defines mapping relationships between scene identifiers and input-method word banks, by taking the received scene identifier as a query identifier, and determine the input-method word bank corresponding to the received scene identifier as the input-method word bank that matches the internal running scene.

In an embodiment, the scene information includes interface information of a running interface of the internal running scene of the target application. In the operation of querying an input-method word bank that matches the internal running scene according to the scene information, the querying unit 802 is specifically configured to: determine, according to the interface information, the internal running scene of the target application; and query a predetermined list which defines mapping relationships between internal running scenes and input-method word banks, by taking the determined internal running scene as a query identifier, and determine the input-method word bank corresponding to the determined internal running scene as the input-method word bank that matches the internal running scene.

In an embodiment, the querying unit 802 is further configured to query a keyword set that matches the internal running scene.

The apparatus 800 for configuring input method further includes a displaying unit 804, the displaying unit 804 is configured to display a shortcut of the keyword set on a running interface of the internal running scene.

In an embodiment, the input-method word bank includes frequently-used words used in the internal running scene, and the frequently-used words have a higher display priority than other words, and the other words are the words included in the input-method word bank except the frequently-used words.

The apparatus 800 for configuring input method further includes a acquiring unit 805 and a determining unit 806.

The acquiring unit 805 is configured to query the enabled input-method word bank according to input information, and acquire and display at least one reference word which is included in the frequently-used words and matches the input information, after the enabling unit 803 enables the input-method word bank.

The determining unit 806 is configured to determine a target word as an input result according to a selection operation on the target word which is included in the at least one reference word.

In an embodiment, the target application is a game application, the internal running scene of the game application includes any one of the following: a preparation scene, a team battle scene, a victory scene, and a settlement scene.

The receiving unit 801 may be a data channel between a user space and an operating system space. The querying unit 802, the enabling unit 803, the displaying unit 804, the acquiring unit 805, and the determining unit 806 may be application processors.

Embodiments of the present disclosure further provide a non-transitory computer readable storage medium, on which computer programs are stored. The computer programs are executed by a processor to carry out the following actions: receiving scene information from a target application, wherein the scene information is configured to indicate an internal running scene of the target application; querying an input-method word bank that matches the internal running scene according to the scene information; and enabling the input-method word bank when an input request in the internal running scene is detected.

In an embodiment, the scene information includes a scene identifier of the internal running scene of the target application. The computer programs executed by the processor to carry out the action of querying an input-method word bank that matches the internal running scene according to the scene information are executed by the processor to carry out the following actions: querying a predetermined list which defines mapping relationships between scene identifiers and input-method word banks, by taking the received scene identifier as a query identifier, and determining the input-method word bank corresponding to the received scene identifier as the input-method word bank that matches the internal running scene.

In an embodiment, the scene information includes interface information of a running interface of the internal running scene of the target application. The computer programs executed by the processor to carry out the action of querying an input-method word bank that matches the internal running scene according to the scene information are executed by the processor to carry out the following actions: determining, according to the interface information, the internal running scene of the target application; and querying a predetermined list which defines mapping relationships between internal running scenes and input-method word banks, by taking the determined internal running scene as a query identifier, and determining the input-method word bank corresponding to the determined internal running scene as the input-method word bank that matches the internal running scene.

In an embodiment, the computer programs are further executed by the processor to carry out the following actions: querying a keyword set that matches the internal running scene; and displaying a shortcut of the keyword set on a running interface of the internal running scene.

In an embodiment, the input-method word bank includes frequently-used words used in the internal running scene, and the frequently-used words have a higher display priority than other words, and the other words are the words included in the input-method word bank except the frequently-used words. The computer programs are further executed by the processor to carry out the following actions after enabling the input-method word bank: querying the enabled input-method word bank according to input information; acquiring and displaying at least one reference word which is comprised in the frequently-used words and matches the input information; and determining a target word as an input result according to a selection operation on the target word comprised in the at least one reference word.

In an embodiment, the programs further include instructions for performing the following operations: acquiring an input record in the internal running scene; generating input-method words based on the input record; and updating, with the generated input-method words, the input-method word bank that matches the internal running scene.

Embodiments of the present disclosure further provide a computer program product. The computer program product includes a non-transitory computer-readable storage medium storing computer programs. The computer programs are operable with a computer to perform part or all of the operations of any of the methods described in the above-described method embodiments. The computer program product may be a software installation package. The above-described computer includes a terminal device.

It is to be noted that, for the sake of simplicity, the foregoing method embodiments are described as a series of action combinations, however, it will be appreciated by those skilled in the art that the present disclosure is not limited by the sequence of actions described. According to the present disclosure, certain steps may be performed in other order or simultaneously. Besides, it will be appreciated by those skilled in the art that the embodiments described in the specification are exemplary embodiments and the actions and modules involved are not necessarily essential to the present disclosure.

In the foregoing embodiments, the description of each embodiment has its own emphasis. For the parts not described in detail in one embodiment, reference may be made to related descriptions of other embodiments.

In the embodiments of the disclosure, the apparatus disclosed in embodiments provided herein may be implemented in other manners. For example, the device/apparatus embodiments described above are merely illustrative. For instance, the division of the units is only a logical function division and there can be other manners of division during actual implementations, for example, multiple units or components may be combined or may be integrated into another system, or some features may be ignored, omitted, or not performed. In addition, coupling or communication connection between each illustrated or discussed component may be direct coupling or communication connection, or may be indirect coupling or communication connection among devices or units via some interfaces, and may be electrical connection, mechanical connection, or other forms of connection.

The units described as separate components may or may not be physically separated, the components illustrated as units may or may not be physical units, that is, they may be in the same place or may be distributed to multiple network elements. Part or all of the units may be selected according to actual needs to achieve the purpose of the technical solutions of the embodiments.

In addition, the functional units in various embodiments of the present disclosure may be integrated into one processing unit, or each functional unit may be physically present, or two or more functional units may be integrated into one unit. The above-mentioned integrated unit may be implemented in the form of hardware or a software function unit.

The integrated unit may be stored in a computer-readable memory when it is implemented in the form of a software functional unit and is sold or used as a separate product. Based on such understanding, the technical solutions of the present disclosure essentially, or the part of the technical solutions that contribute to the related art, or all or part of the technical solutions, may be embodied in the form of a software product which is stored in a memory and includes instructions for causing a computer device (which may be a personal computer, a server, or a network device and so on) to perform all or part of the steps described in the various embodiments of the present disclosure. The memory includes various medium capable of storing program codes, such as a USB (universal serial bus) flash disk, a read-only memory (ROM), a random-access memory (RAM), a removable hard disk, a disk, a compact disc (CD), or the like.

It will be understood by those of ordinary skill in the art that all or part of the operations of the various methods of the embodiments described above may be accomplished by means of a program to instruct associated hardware. The program may be stored in a computer-readable memory, which may include a flash memory, a read-only memory (ROM), a random-access memory (RAM), a disk or a compact disc (CD), and so on.

The embodiments of the present disclosure are described in detail above, specific examples are used herein to describe the principle and implementation manners of the present disclosure. The description of the above embodiments is merely used to help understand the method and the core idea of the present disclosure. Meanwhile, those skilled in the art may make modifications to the specific implementation manners and the application scope according to the idea of the present disclosure. In summary, the contents of the specification should not be construed as limiting the present disclosure.

## Claims

1. A method for configuring an input method, applied to a terminal device which is provided with an operating system and one or more applications, the method comprising:
receiving, by the operating system, scene information from a target application, the scene information being configured to indicate an internal running scene of the target application (401);
querying, by the operating system, an input-method word bank that matches the internal running scene according to the scene information (402); and
enabling, by the operating system, the input-method word bank when an input request in the internal running scene is detected (403).

2. The method of claim 1, wherein the scene information comprises a scene identifier of the internal running scene of the target application, the querying, by the operating system, an input-method word bank that matches the internal running scene according to the scene information (402), comprises:
querying, by the operating system, a predetermined list which defines mapping relationships between scene identifiers and input-method word banks, by taking the received scene identifier as a query identifier (502); and
determining, by the operating system, the input-method word bank corresponding to the received scene identifier as the input-method word bank that matches the internal running scene (502).

3. The method of claim 1, wherein the scene information comprises interface information of a running interface of the internal running scene of the target application, the querying, by the operating system, an input-method word bank that matches the internal running scene according to the scene information (402), comprises:
determining, by the operating system, according to the interface information, the internal running scene of the target application (602); and
querying, by the operating system, a predetermined list which defines mapping relationships between internal running scenes and input-method word banks, by taking the determined internal running scene as a query identifier (603); and
determining, by the operating system, the input-method word bank corresponding to the determined internal running scene as the input-method word bank that matches the internal running scene (603).

4. The method of any of claims 1 to 3, the method further comprising:
querying, by the operating system, a keyword set that matches the internal running scene (605); and
displaying, by the operating system, a shortcut of the keyword set on a running interface of the internal running scene (605).

5. The method of claim 4, wherein the input-method word bank comprises frequently-used words used in the internal running scene, wherein the frequently-used words have a higher display priority than other words, and the other words are the words comprised in the input-method word bank except the frequently-used words, the method further comprises the follows after enabling the input-method word bank:
querying, by the operating system, the enabled input-method word bank according to input information (504, 607);
acquiring and displaying, by the operating system, at least one reference word which is comprised in the frequently-used words and matches the input information (504, 607); and
determining, by the operating system, a target word as an input result according to a selection operation on the target word comprised in the at least one reference word (505, 608).

6. The method of claim 5, wherein the target application is a game application, the internal running scene of the game application comprises any one of the following: a preparation scene, a team battle scene, a victory scene, and a settlement scene.

7. The method of claim 5, the method further comprising:
acquiring an input record in the internal running scene;
generating input-method words based on the input record; and
updating, with the generated input-method words, the input-method word bank that matches the internal running scene.

8. A terminal device (700), comprising:
at least one processor (701); and
a computer readable storage, coupled to the at least one processor (701) and storing at least one computer executable instruction thereon, which when executed by the at least one processor (701), cause the at least one processor (701) to carry out actions, comprising:
receiving scene information from a target application, wherein the scene information is configured to indicate an internal running scene of the target application;
querying an input-method word bank that matches the internal running scene according to the scene information; and
enabling the input-method word bank when an input request in the internal running scene is detected.

9. The terminal device (700) of claim 8, wherein the scene information comprises a scene identifier of the internal running scene of the target application, the at least one processor (701) carrying out the action of querying an input-method word bank that matches the internal running scene according to the scene information is caused to carry out actions, comprising:
querying a predetermined list which defines mapping relationships between scene identifiers and input-method word banks, by taking the received scene identifier as a query identifier; and
determining the input-method word bank corresponding to the received scene identifier as the input-method word bank that matches the internal running scene.

10. The terminal device (700) of claim 8, wherein the scene information comprises interface information of a running interface of the internal running scene of the target application, the at least one processor (701) carrying out the action of querying an input-method word bank that matches the internal running scene according to the scene information is caused to carry out actions, comprising:
determining, according to the interface information, the internal running scene of the target application; and
querying a predetermined list which defines mapping relationships between internal running scenes and input-method word banks, by taking the determined internal running scene as a query identifier; and
determining, the input-method word bank corresponding to the determined internal running scene as the input-method word bank that matches the internal running scene.

11. The terminal device (700) of any of claims 8 to 10, wherein the at least one processor (701) is further caused to carry out actions, comprising:
querying a keyword set that matches the internal running scene; and
displaying a shortcut of the keyword set on a running interface of the internal running scene.

12. The terminal device (700) of claim 11, wherein the input-method word bank comprises frequently-used words used in the internal running scene, wherein the frequently-used words have a higher display priority than other words, and the other words are the words comprised in the input-method word bank except the frequently-used words, the at least one processor (701) is further caused to carry out the following actions after enabling the input-method word bank:
querying the enabled input-method word bank according to input information;
acquiring and displaying at least one reference word which is comprised in the frequently-used words and matches the input information; and
determining a target word as an input result according to a selection operation on the target word comprised in the at least one reference word.

13. The terminal device (700) of claim 12, wherein the target application is a game application, the internal running scene of the game application comprises any one of the following: a preparation scene, a team battle scene, a victory scene, and a settlement scene.

14. The terminal device (700) of claim 12, the at least one processor (701) is further caused to carry out actions, comprising:
acquiring an input record in the internal running scene;
generating input-method words based on the input record; and
updating, with the generated input-method words, the input-method word bank that matches the internal running scene.

15. A non-transitory computer-readable storage medium storing computer programs which, when executed by a processor (701), cause the processor (701) to perform the method of any of claims 1 to 7.
